# EUROPEAN PATENT APPLICATION

(11) **EP 4 657 118 A1**
(43) Date of publication of application: **03.12.2025**
(21) Application number: 24216434.1
(22) Date of filing: 29.11.2024
(51) Int. Cl.: G01S 13/86, G01S 13/931, G01S 7/02, G01S 13/34

(54) **METHOD, APPARATUS, AND SYSTEM WITH MULTI-MODALITY SENSING**

(30) Priority: 31.05.2024 KR 20240071842
(71) Applicant: Samsung Electronics Co., Ltd., Suwon-si, Gyeonggi-do 16677 (KR)
(72) Inventor: KIM, Jong-Sok, 16678 Gyeonggi-do (KR); KHANG, Seung Tae, 16678 Gyeonggi-do (KR); JEON, Jinyong, 16678 Gyeonggi-do (KR)
(74) Representative: Arnold & Siedsma

(57) **Abstract**

A method, apparatus, and system with multi-modality sensing are provided. A multi-modality sensor includes a radio detection and ranging (radar) sensor including a radio-frequency integrated circuit (RFIC), and an image sensor, including a sensor array, stacked on a portion of the radar sensor, with at least a circuitry portion of the image.

## Description

### BACKGROUND

### 1. Field

The following description relates to method, apparatus, and system with multi-modality sensing.

### 2. Description of Related Art

An advanced driver-assistance system (ADAS) is a system that may support driving to improve safety and convenience of a driver and to avoid dangerous situations by using sensors mounted inside or outside a vehicle.

Sensors used in an ADAS may include, for example, a camera sensor, an infrared sensor, an ultrasonic sensor, a light detection and ranging (LiDAR) sensor, and a radio detection and ranging (radar) sensor. Camera sensors or infrared sensors may be respectively arranged around a vehicle to capture visual information in a driving direction or other surrounding environments of the vehicle. A LiDAR sensor may recognize an object, located in the line-of-sight of the LIDAR sensor, precisely in three dimensions by measuring distance, width, and height information of the object but may be sensitive to the external environmental influences. Radar sensors use electromagnetic radiated waves instead of a laser used by the LiDAR sensor. A radar sensor may radiate an electromagnetic wave and measure distance, speed, and direction information of an object based on a received reflection of the electromagnetic wave off of the object. The radar sensor may more stably measure information of an object in the vicinity of a vehicle across differing external environment influences, such as differing weather conditions, compared to optical-based sensors.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a multi-modality sensor includes a radio detection and ranging (radar) sensor including a radio-frequency integrated circuit (RFIC), and an image sensor, including a sensor array, stacked on a portion of the radar sensor, with at least a circuitry portion of the image sensor being configured in a single chip with the RFIC.

The single chip may include the image sensor and the RFIC configured as the single chip using a same substrate, or configured as the single chip in a form of a system in package (SIP) or a chiplet package.

The circuitry portion of the image sensor may include the sensor array.

A first sampling rate of the image sensor and a second sampling rate of the radar sensor may have a controlled correspondence with each other.

The multi-modality sensor may be configured to combine first data generated by the image sensor and second data generated by the radar sensor into a combined time-synchronized data.

The combined time-synchronized data may represent image and radar data that are aligned according to a field of view (FoV) of an image frame captured by the image sensor.

The combined time-synchronized data may include least one respective information of a direction vector, speed, or three-dimensional location including an angle and a distance from the multi-modality sensor to a target object.

The multi-modality sensor may further include an antenna array, including a plurality of antennas, configured to radiate a first electromagnetic wave signal through the antenna array, and to receive a second electromagnetic wave signal corresponding to a reflection of the radiated first electromagnetic wave signal off of an object, where the antenna array may be arranged, within a package of the multi-modality sensor, in a first lateral direction away from one or two first opposing sides of the sensor array, and/or in a second lateral direction, which is perpendicular to the first lateral direction, away from one or two second opposing sides of the sensor array, to radiate a signal of the radar sensor to a target object located in a corresponding direction.

The antenna array and the sensor array may be configured in a same chip.

The multi-modality sensor may further include an upper portion of the multi-modality sensor that includes a first extraction circuitry configured to extract image information by reading out a signal of the sensor array, based on a clock signal, and a lower portion of the multi-modality sensor that may include one of a second extraction circuitry that may be configured to extract radar information from a signal of the radar sensor, based on a source signal, or the second extraction circuitry and a transmission module that may be configured to transmit a combined time-synchronized data that has the image information combined with the radar information.

The first extraction circuitry may include at least one of a control logic circuit configured to generate and transmit a control signal for reading out a first signal of the sensor array, a decoder configured to decode an analog signal of the sensor array, a first analog-to-digital converter (ADC) configured to convert the decoded analog signal into a digital signal, or a clock generator configured to generate the clock signal.

The second extraction circuitry may include at least one of a ramp generator configured to generate the source signal for the radar sensor, a synthesizer configured to change a frequency band of the source signal, a phase controller configured to generate a radiation signal in a frequency band in which a signal with the changed frequency band is up-converted by a multiple of 4, a filter low-noise amplifier (LNA) configured to detect and amplify a reflection signal in which the radiation signal is reflected by hitting a target object, an intermediate frequency (IF) circuit configured to extract the source signal from the amplified reflection signal, or a second ADC configured to convert the extracted source signal into a digital signal.

The multi-modality sensor may be configured to combine first data of the image sensor and second data of the radar sensor to generate the combined time-synchronized data by controlling a first sampling rate of the image sensor and a second sampling rate of the radar sensor, based on the source signal and the clock signal generated by the clock generator included in the multi-modality sensor.

The multi-modality sensor may be configured to provide a driving reference signal for time synchronization with at least one external sensor.

In one general aspect, a multi-modality sensor includes a radio detection and ranging (radar) sensor including a radio-frequency integrated circuit (RFIC) formed on a substrate, an image sensor, including a sensor array, stacked on a portion of the radar sensor, and a plurality of antennas at least partially arranged around the sensor array, wherein the sensor array is arranged between the plurality of antennas, and the sensor array and the plurality of antennas are configured in a form of a single chip.

A first sampling rate of first data of the image sensor and a second sampling rate of second data of the radar sensor may have a controlled correspondence to each other.

The multi-modality sensor may be configured to combine first data generated by the image sensor and second data generated by the radar sensor into a combined time-synchronized data.

The combined time-synchronized data may be aligned according to a field of view (FoV) within an image frame of the image sensor.

In one general aspect, a multi-modality sensor includes a radio detection and ranging (radar) sensor including a radio-frequency integrated circuit (RFIC), an image sensor, including a sensor array, stacked on a portion of the radar sensor, and a common circuit including at least one of a down-sampling circuit configured to down-sample a signal generated by the radar sensor, a read-out circuit configured to read out data from the sensor array, or a clock generator, wherein the radar sensor, the image sensor, and the common circuit are packaged as a single chip.

The common circuit may be arranged between the radar sensor and the image sensor.

The common circuit may be arranged on a same substrate as the radar sensor.

The common circuit may be arranged at least partially around the radar sensor and the image sensor without being in contact with the radar sensor and the image sensor.

Other features and aspects will be apparent from the following detailed description, the drawings, and the claims.

In another general aspect, multi-modality sensors according to the following set of clauses are provided:
1. A multi-modality sensor comprising:
   a radio detection and ranging (radar) sensor including a radio-frequency integrated circuit (RFIC); and
   an image sensor, including a sensor array, stacked on a portion of the radar sensor, with at least a circuitry portion of the image sensor being configured in a single chip with the RFIC.
2. The multi-modality sensor of clause 1, wherein the single chip includes the image sensor and the RFIC being configured as the single chip using a same substrate, or configured as the single chip in a form of a system in package (SIP) or a chiplet package.
3. The multi-modality sensor of clause 1 or 2, wherein the circuitry portion of the image sensor includes the sensor array.
4. The multi-modality sensor of any one of the previous clauses, wherein a first sampling rate of the image sensor and a second sampling rate of the radar sensor have a controlled correspondence with each other.
5. The multi-modality sensor of any one of the previous clauses, wherein the multi-modality sensor is configured to combine first data generated by the image sensor and second data generated by the radar sensor into a combined time-synchronized data.
6. The multi-modality sensor of clause 5, wherein the combined time-synchronized data represents image and radar data that are aligned according to a field of view (FoV) of an image frame captured by the image sensor.
7. The multi-modality sensor of clause 5, wherein the combined time-synchronized data comprises least one respective information of a direction vector, speed, or three-dimensional location including an angle and a distance from the multi-modality sensor to a target object.
8. The multi-modality sensor of any one of the previous clauses, further comprising:
   an antenna array, including a plurality of antennas, configured to radiate a first electromagnetic wave signal through the antenna array, and to receive a second electromagnetic wave signal corresponding to a reflection of the radiated first electromagnetic wave signal off of an object,
   wherein the antenna array is arranged, within a package of the multi-modality sensor, in a first lateral direction away from one or two first opposing sides of the sensor array, and/or in a second lateral direction, which is perpendicular to the first lateral direction, away from one or two second opposing sides of the sensor array, to radiate a signal of the radar sensor to a target object located in a corresponding direction.
9. The multi-modality sensor of clause 8, wherein the antenna array and the sensor array are configured in a same chip.
10. The multi-modality sensor of any one of the previous clauses, further comprising:
   an upper portion of the multi-modality sensor comprising a first extraction circuitry configured to extract image information by reading out a signal of the sensor array, based on a clock signal; and
   a lower portion of the multi-modality sensor comprising one of:
      a second extraction circuitry configured to extract radar information from a signal of the radar sensor, based on a source signal, or
      the second extraction circuitry and a transmission module configured to transmit a combined time-synchronized data that has the image information combined with the radar information.
11. The multi-modality sensor of clause 10, wherein the first extraction circuitry comprises at least one of:
   a control logic circuit configured to generate and transmit a control signal for reading out a first signal of the sensor array;
   a decoder configured to decode an analog signal of the sensor array;
   a first analog-to-digital converter (ADC) configured to convert the decoded analog signal into a digital signal; or
   a clock generator configured to generate the clock signal.
12. The multi-modality sensor of clause 10, wherein the second extraction circuitry comprises at least one of:
   a ramp generator configured to generate the source signal for the radar sensor;
   a synthesizer configured to change a frequency band of the source signal;
   a phase controller configured to generate a radiation signal in a frequency band in which a signal with the changed frequency band is up-converted by a multiple of 4;
   a filter low-noise amplifier (LNA) configured to detect and amplify a reflection signal in which the radiation signal is reflected by hitting a target object;
   an intermediate frequency (IF) circuit configured to extract the source signal from the amplified reflection signal; or
   a second ADC configured to convert the extracted source signal into a digital signal.
13. The multi-modality sensor of clause 10, wherein the multi-modality sensor is configured to combine first data of the image sensor and second data of the radar sensor to generate the combined time-synchronized data by controlling a first sampling rate of the image sensor and a second sampling rate of the radar sensor, based on the source signal and the clock signal generated by the clock generator comprised in the multi-modality sensor.
14. The multi-modality sensor of any one of the previous clauses, wherein the multi-modality sensor is configured to provide a driving reference signal for time synchronization with at least one external sensor.
15. A multi-modality sensor comprising:
   a radio detection and ranging (radar) sensor including a radio-frequency integrated circuit (RFIC) formed on a substrate;
   an image sensor, including a sensor array, stacked on a portion of the radar sensor; and
   a plurality of antennas at least partially arranged around the sensor array,
   wherein the sensor array is arranged between the plurality of antennas, and the sensor array and the plurality of antennas are configured in a form of a single chip.
16. The multi-modality sensor of clause 15, wherein a first sampling rate of first data of the image sensor and a second sampling rate of second data of the radar sensor have a controlled correspondence to each other.
17. The multi-modality sensor of clause 15 or 16, wherein the multi-modality sensor is configured to combine first data generated by the image sensor and second data generated by the radar sensor into a combined time-synchronized data.
18. The multi-modality sensor of clause 17, wherein the combined time-synchronized data is aligned according to a field of view (FoV) within an image frame of the image sensor.
19. A multi-modality sensor comprising:
   a radio detection and ranging (radar) sensor including a radio-frequency integrated circuit (RFIC);
   an image sensor, including a sensor array, stacked on a portion of the radar sensor; and
   a common circuit including at least one of a down-sampling circuit configured to down-sample a signal generated by the radar sensor, a read-out circuit configured to read out data from the sensor array, or a clock generator,
   wherein the radar sensor, the image sensor, and the common circuit are packaged as a single chip.
20. The multi-modality sensor of clause 19, wherein the common circuit is arranged between the radar sensor and the image sensor.
21. The multi-modality sensor of clause 19 or 20, wherein the common circuit is arranged on a same substrate as the radar sensor.
22. The multi-modality sensor of any one of the clauses 19-21, wherein the common circuit is arranged at least partially around the radar sensor and the image sensor without being in contact with the radar sensor and the image sensor.

### BRIEF DESCRIPTION OF THE DRAWINGS

FIG. 1A illustrates a typical arrangement relationship between a typical camera sensor and a typical radio detection and ranging (radar) sensor in a typical advanced driver-assistance system (ADAS).
FIG. 1B illustrates example information captured by the typical camera sensor, example information captured by the typical radar sensor, and typical information misalignments between the same.
FIG. 2A illustrates an example of a cross-sectional view of a multi-modality sensor, according to one or more embodiments.
FIG. 2B illustrates an example of an exploded perspective view of a multi-modality sensor, according to one or more embodiments.
FIG. 2C illustrates an example of an exploded perspective view of a multi-modality sensor, according to one or more embodiments.
FIG. 2D illustrates an example of a plan view of a multi-modality sensor, according to one or more embodiments.
FIG. 2E illustrates example fields of view (FoVs) of a multi-modality sensor, according to one or more embodiments.
FIG. 3A illustrates an example of a configuration of a multi-modality sensor, according to one or more embodiments.
FIG. 3B illustrates an example of a configuration of a multi-modality sensor including an antenna array, according to one or more embodiments.
FIG. 3C illustrates an example of an arrangement form of an antenna array in a multi-modality sensor, according to one or more embodiments.
FIG. 4 illustrates an example of a configuration of a multi-modality sensor, according to one or more embodiments.
FIG. 5A illustrates an example of an exploded perspective view of a multi-modality sensor, according to one or more embodiments.
FIG. 5B illustrates an example of a configuration of a multi-modality sensor, according to one or more embodiments.
FIG. 6A illustrates an example of an exploded perspective view of a multi-modality sensor, according to one or more embodiments.
FIG. 6B illustrates an example of a configuration of a multi-modality sensor, according to one or more embodiments.
FIG. 7A illustrates an example of various configurations of a multi-modality sensor, according to various embodiments.
FIG. 7B illustrates an example of a configuration of a multi-modality sensor, according to one or more embodiments.
FIG. 8 illustrates an example of a sensor system including a multi-modality sensor and a computing system including the sensor system, according to one or more embodiments.
FIG. 9A illustrates an example of a coupling method between a multi-modality sensor and other sensors, according to one or more embodiments.
FIG. 9B illustrates an example of a data transmission method between a multi-modality sensor and other sensors, according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, and modifications of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order (e.g., a certain order). Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

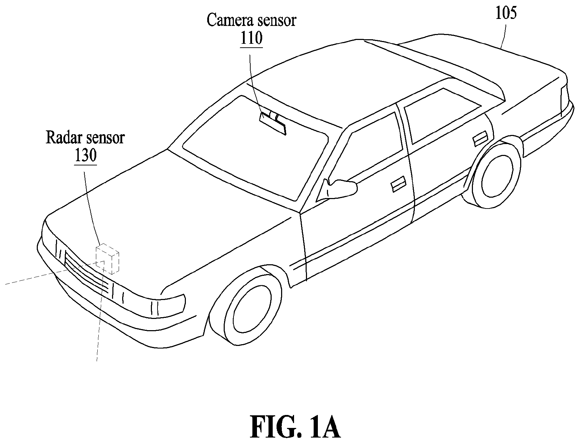

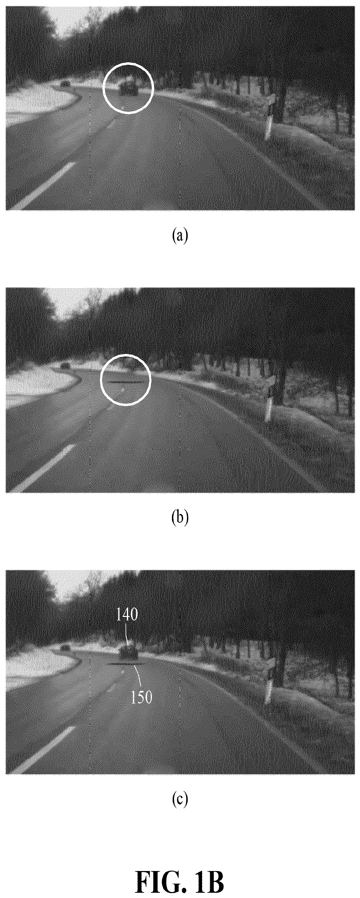

FIG. 1A illustrates a typical arrangement relationship between a typical camera sensor and a typical radio detection and ranging (radar) sensor in a typical advanced driver-assistance system (ADAS). FIG. 1B illustrates example information captured by the typical camera sensor, information captured by the typical radar sensor, and typical information misalignments between the same.

Referring to FIG. 1A, a vehicle 105 is illustrated with a camera sensor 110 placed at the upper end of a front window, and a radar sensor 130 mounted on a front bumper.

The vehicle 105 may be, for example, a vehicle that includes an ADAS function or an autonomous driving vehicle but is not necessarily limited thereto. In the vehicle 105, the camera sensor 110 and the radar sensor 130 are different devices (each with their distinct hardware components and circuitries) mounted at different positions of the vehicle 105 (i.e., either in different areas of the vehicle or merely adjacent to each other). As illustrated in FIG. 1A, the camera sensor 110 and the radar sensor 130 may respectively detect light and electromagnetic waves from the same direction (e.g., by each of the camera sensor 110 and the radar sensor 13 facing a front driving direction of the vehicle). In the vehicle 105, the respective information detected by each of multiple sensors may subsequently be used together by the vehicle to help ensure safety of the vehicle operation by complementing potential limitations of one sensor of one modality with another sensor of a different modality.

However, due to the camera sensor 110 and the radar sensor 130 being mounted at different positions in the vehicle 105, there is a difference in field of view (FoV) between the image sensor 110 and the radar sensor 130 and a difference between a frame/sampling rate between images captured by the image sensor 110 and a frame/sampling rate of the radar sensor 130. Due to such differences, if data of an image captured by the camera sensor 110 (shown in illustration (a) of FIG. 1B) and radar data detected by the radar sensor 130 (shown in illustration (b) of FIG. 1B) are combined, an alignment error occurs between a location 140 of another vehicle captured by the camera sensor 110 and a location 150 of the other vehicle detected by the radar sensor 130 (as shown in illustration (c) of FIG. 1B).

One or more embodiments include a vehicle, such as the vehicle 105, with one or more multi-modality sensors, each of which may include a camera sensor and a radar sensor configured with at least a portion of the camera sensor being arranged with at least a portion of the radar sensor in a single chip. The multi-modality sensor may help avoid the previous alignment errors that were due to the typical physical position differences between the typical camera sensor 110 and typical radar sensor 130 of FIG. 1A. Further, the multi-modality sensor may help with the synchronizing of the respective data obtained using the camera sensor of the muti-modality sensor with data obtained using the radar sensor of the multi-modality sensor. Further, due to such synchronizing, one combined time-synchronized data may also be generated, thereby transmitting the respective data of the camera sensor and the radar sensor with synchronized timing.

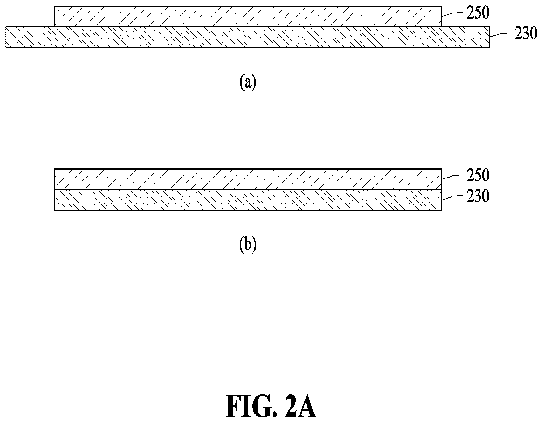

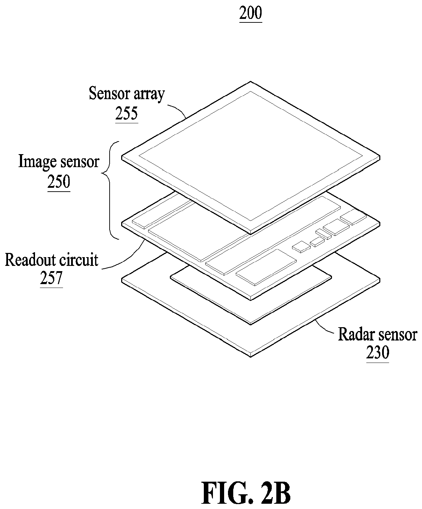

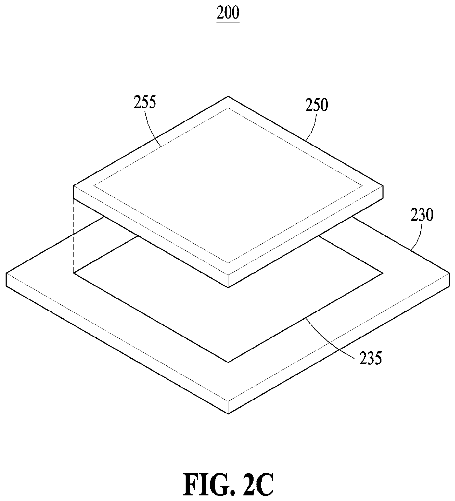

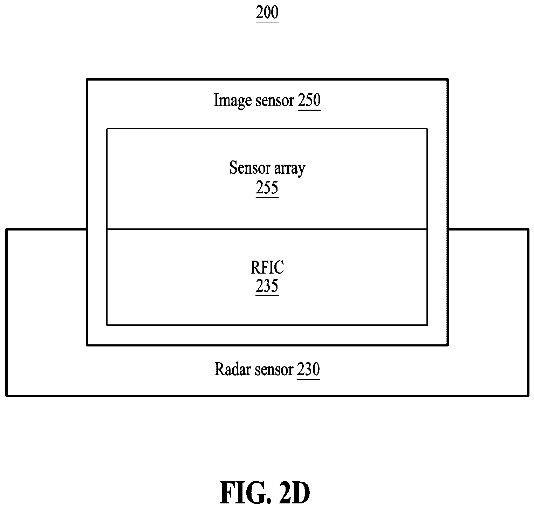

FIG. 2A illustrates an example of a cross-sectional view of a multi-modality sensor according to one or more embodiments, and FIG. 2B illustrates an example of an exploded perspective view of a multi-modality sensor according to one or more embodiments. FIG. 2C illustrates an example of an exploded perspective view of a multi-modality sensor according to one or more embodiments, and FIG. 2D illustrates an example of a plan view of a multi-modality sensor according to one or more embodiments.

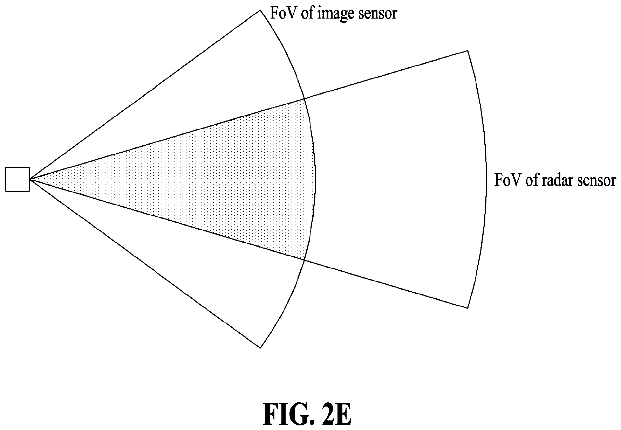

Referring to FIGS. 2A through 2D, respective multi-modality sensors 200 may each include a corresponding radar sensor 230 and corresponding image sensor 250. While any of or any combination of the multi-modality sensors 200 of FIGS. 2A through 2E may be different multi-modality sensors 200, the multi-modality sensors 200 in FIGS. 2B through 2E may correspond to the multi-modality sensor 200 of illustration (a) of FIG. 2A, and the multi-modality sensors 200 of FIGS. 2B and 2E may correspond to the multi-modality sensor 200 of illustration (b) of FIG. 2A, as non-limiting examples.

As demonstrated in FIG. 2A, the radar sensors 230 may be stacked on the image sensors 250. Illustration (a) of FIG. 2A further illustrates that the size (or an area) of the radar sensor 230 may be greater than the size of the image sensor 250, while illustration (b) of FIG. 2A illustrates that the size (or area) of the radar sensor 230 may be equal to the size of the image sensor 250. As illustrated in FIG. 2C, the image sensor 250 may include a sensor array 255, and the image sensor 250 may be stacked on a radio-frequency integrated circuit (RFIC) 235 of the radar sensor 230.

As another example, as illustrated in FIG. 2B, the image sensor 250 may include the sensor array 255 and a readout circuit 257, and may be arranged in an upper portion of the multi-modality sensor 200, while the radar sensor 230 may include the RFIC 235 and may be arranged in a lower portion the multi-modality sensor 200. As a non-limiting example, herein components and circuitries arranged in an upper portion of a multi-modality sensor 200 may be arranged in one or more chips or circuitry layers, while components and circuitries in a lower portion of the multi-modality sensor 200 may be arranged in one or more different chips or circuitry layers.

In an example, as illustrated in FIG. 2D, the image sensor 250 may be stacked on the RFIC 235 of the radar sensor. For example, the sensor array 255 of the image sensor 250 may be arranged in the upper portion of the multi-modality sensor 200, while the readout circuit 257 of the image sensor 250 may be arranged in the lower portion of the multi-modality sensor 200 along with the radar sensor 230, including the RFIC 235. As another example, the image sensor 250, including the sensor array 255 and the readout circuit 257, and the RFIC 235 of the radar sensor 230 may be arranged in the upper portion of the multi-modality sensor 200, while other portions of the radar sensor 230 are arranged in the lower portion of the multi-modality sensor 200.

Thus, in differing embodiments and as non-limiting examples, at least a portion of the image sensor 250 and a portion of the radar sensor 230 may arranged in a single chip, which can include all portions of the image sensor 250 and all portions of the radar sensor being separately arranged in the same chip in a non-stacked arrangement, all portions of the image sensor 250 and all portions of the radar sensor being separately arranged in the same chip in a stacked arrangement, all or less than all component or circuitry portions of the image sensor 250 being co-arranged (e.g., in a same chip or circuitry) within the upper portion of the multi-modality sensor 200 and remaining component or circuitry portions of the radar sensor 230 being arranged in the lower portion of the multi-modality sensor 200, and all or less than all component or circuitry portions of the radar sensor 230 being co-arranged (e.g., in a same chip or circuitry within the lower portion) of the multi-modality sensor 200 with remaining component or circuitry portions of the image sensor 250 being arranged in the upper portion of the multi-modality sensor 200.

In an example, the terms "upper" and "lower" may correspond to a defined orientation. For example, with this defined orientation, references to an "upper" portion of an image sensor 250 or radar sensor 230, or other components or circuitries in addition to either of the image sensor 250 or radar sensor 230, may refer to a portion of the corresponding image sensor 250 or radar sensor 230 (or the other components or circuitries) that is closer to the light incident side of the image sensor 250 (i.e., incident on the image sensor 250 from an exterior environment beyond the multi-modality sensor 200, such as through an example lens of or attached or coupled to the image sensor 250 in some embodiments) than another portion of the corresponding image sensor 250 or radar sensor 230 (or the other component or circuitries).

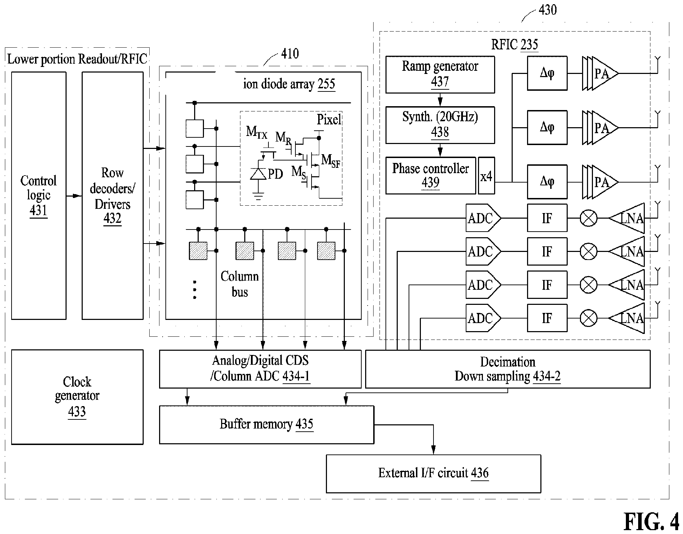

As described in more detail below, the RFIC 235 of the radar sensor 230 may include a radio frequency (RF) front end for receiving and transmitting RF signals. The RF front end may include, for example, a power amplifier (PA), a duplexer (and a diplexer), an RF switch, a filter low noise amplifier (LNA), and/or a baseband chip, such as illustrated in FIGS. 4, 5B, 6B, and 7B, as non-limiting example. However, examples are not necessarily limited thereto.

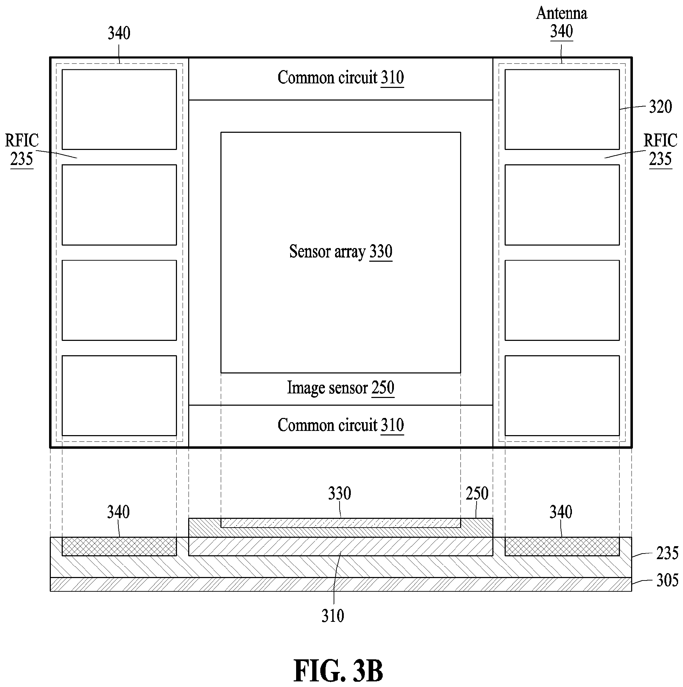

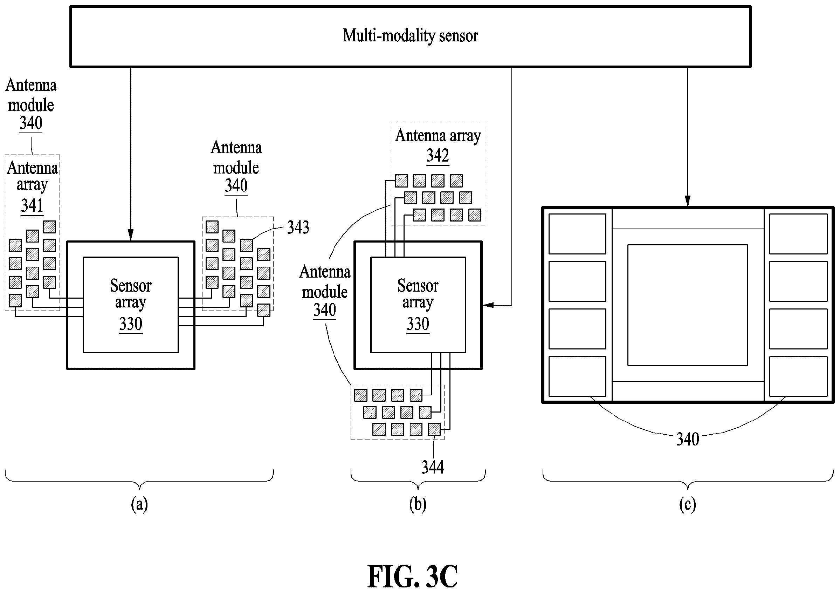

The radar sensor 230 may radiate radio waves (e.g., electromagnetic waves) and then may detect or measure/calculate a distance to an object (e.g., a target object), moving speed, and direction information from received radio waves that are the reflections of the radiated radio waves off of the object. The radar sensor 230 may include, for example, a transmitter, a receiver, and an antenna (such as any of the antenna modules 340 of FIGS. 3B and 3C). The longer the wavelength of the radio waves, the further away from the radar sensor 230 the radio waves may reach with sufficient energy for their reflections to be reasonably detected. Since the radar sensor 230 uses radio waves, location accuracy due to a diffraction phenomenon may be relatively low compared to other sensors, but measurement accuracy of relative speed of the object to be measured may be increased by considering the Doppler effect, etc., on the received radio waves.

Depending on embodiment, different signal radiation methods may be implemented. For example, the radar sensor 230 may be configured to operate as a pulse radar, which uses a pulse signal radiation method, and/or a frequency modulation continuous wave (FMCW) radar, which uses a continuous wave (CW) signal radiation method. In the pulse radar configuration example, the radar sensor 230 may transmit a signal using a type of an amplitude modulation which transmits strong electromagnetic waves for a short period of time, and the radar sensor 230 may measure the time between signals that are reflected from an object and returning. In the FMCW radar configuration example, the radar sensor 230 may detect movement of an object by continuously transmitting radio waves and measuring the difference from a transmission frequency by measuring the reflected waves that return after hitting the object. In the FMCW radar configuration example, the radar sensor 230 may detect not only a moving object but also the speed of the object. An FMCW radar may also be referred to as "a Doppler radar". Since the FMCW radar uses time information that may determine the time of reflected waves to measure a distance, transmission time may be obtained by changing the frequency between a transmitted signal and a received signal to measure a distance by the FMCW radar, for example.

The image sensor 250 may be, for example, a complementary metal-oxide-semiconductor (CMOS) image sensor (CIS) but is not necessarily limited thereto. The sensor array 255 may be, for example, a CMOS photo sensor array but is not necessarily limited thereto.

In an example, the image sensor 250 is inside or includes a camera, such as the example with a lens incorporated with the sensor array 255 (which is an example represented by the illustrated image sensors 250), and thus, the image sensor 250 may also be referred to as a "camera sensor". The image sensor 250 may convert light into an electrical signal and may, as non-limiting examples, be classified into a CMOS-type image sensor (a CMOS sensor) and a charge-coupled device (CCD)-type image sensor (a CCD sensor). Both a CMOS sensor and a CCD sensor may generate a video or images by converting a brightness signal (amount of charge) of light into an image signal. However, while the CMOS sensor transmits a charge of each pixel as a digital signal, the CCD sensor may directly transmit a charge of each pixel. While some examples herein refer to an image sensor as capturing and generating image information corresponding to light in a visible spectrum, embodiments are not limited thereto.

Thus, the image sensor 250 may be a system semiconductor that converts light incident on a sensor into a digital signal and transmits the digital signal. The image sensor 250 may generate the digital signal of an image or photo by converting light energy into electrical energy.

Since the image sensor 250 determines an object through an image, the image sensor 250 may determine general location information. For example, since an image captured by the image sensor 250 may be a two-dimensional image, an error in an indicated location in a driving (e.g., depth representative vertical direction in the image) direction of a vehicle may be relatively large, but an error in an indicated location in a direction perpendicular to the driving direction (e.g., lateral or vision representative horizontal direction in the image) may be small. Accordingly, data captured by the image sensor 250 may be suitable for determining lanes that are long in a vertical direction of the driving direction image and tightly extend in a horizontal direction of the driving direction image, as a non-limiting example.

With respect to the above examples, where all or less than all component or circuitry portions of the image sensor 250 may be co-arranged with all or less than all component or circuitry portions of the radar sensor 230, such co-arrangement may include the all or less than all component or circuitry portions of the image sensor 250 and the all or less than all component or circuitry portions of the radar sensor 230 being configured as a single chip based on silicon (e.g., using a single or same silicon-based or other substrate), or the single chip may be in the form of a system in package (SIP) or a chiplet package, as shown in FIG. 2D.

A first sampling rate corresponding to first data captured by the image sensor 250 and a second sampling rate corresponding to second data captured/received by the radar sensor 230 may be the same or otherwise have a predefined correspondence to each other. For example, the first sampling rate and the second sampling rate may be integer multiples.

As a non-limiting example, the image sensor 250 and the radar sensor 230 may each capture data in frames for the same scene according to such corresponding sampling rates. For example, the image sensor 250 and the radar sensor 230 may capture their respective inputs in synchronization at the same time.

Such as illustrated in the antenna modules 340 of FIGS. 3B or 3C, the multi-modality sensor 200 may further include an antenna module as a portion of the radar sensor 230, attached to the radar sensor 230, or otherwise electronically connected to the radar sensor 230. The antenna module may include an antenna array including a plurality of antennas. The antenna module may be controlled by the radar sensor 230 to radiate a first signal using the antenna array and may receive or detect a second signal as the reflection of the first signal. In an example, the antenna module may be arranged together with the radar sensor 230 (or at least components and circuitries of the radar sensor 230) in the lower portion of the multi-modality sensor 200. Some example arrangements of the antenna array(s) of the antennal module are described in more detail with reference to FIG. 3C below.

Referring back to FIG. 2B, while the upper portion of the multi-modality sensor 200 may include, for example, the sensor array 255 of the image sensor 250, the readout circuit 257 for extracting or transmitting data of the image sensor 250, control logic, and/or a driver, examples are not necessarily limited thereto, and while the lower portion of the multi-modality sensor 200 may include the radar sensor 230, including the RFIC of the radar sensor 230, as well as an analog-to-digital converter (ADC) circuit, memory, and/or an external transmission interface (I/F), examples are not necessarily limited thereto.

In this example of FIG. 2B, some of the components or circuitries in the upper portion of the multi-modality sensor 200 (e.g., other than the sensor array 255) may be considered as making up a first extraction module, while some components or circuitries in the lower portion of the multi-modality sensor 200 may be considered as making up a second extraction module and a transmission module. Here, while examples include the first and second extraction modules being respectively arranged in the different portions of the multi-modality sensor 200, examples are not limited thereto.

As a non-limiting example, the first extraction module may extract (and thereby generate) image information by reading out an image signal of the sensor array, based on a clock signal generated by a clock generator. As a non-limiting example, the first extraction module may include a control logic circuit, a decoder, a clock generator, a first ADC, and a down sampling circuit that may perform like functions as a control logic circuit 431, a decoder 432, a clock generator 433, a first ADC 434-1, and a down sampling circuit 434-2 of FIG. 4, as a non-limiting example.

As a non-limiting example, the second extraction module may extract (and thereby generate) radar information from the radar sensor 230 according to a source signal generated by a ramp generator, also based on the clock signal generated by the clock generator. Here, "a ramp generator" may correspond to a circuit that is configured to generate a linear rising or falling output (e.g., a ramp voltage) depending on time, such as a generator that raises a voltage, to a specific value, called a ramp. The source signal may be a detection wave source of the radar sensor 230 and may be, for example, a radio wave in a band of approximately 1 centimeter (cm) to 1 millimeter (mm) or a microwave/millimeter wave radio frequency, but examples are not necessarily limited thereto. As a non-limiting example, the second extraction module may include the ramp generator, a synthesizer, a phase controller, a filter LNA, an intermediate frequency (IF) circuit, and a second ADC that may perform like functions as a ramp generator 437, a synthesizer 438, a phase controller 439, filter LNAs, intermediate frequency (IF) circuits, and additional ADCs of the RFIC 235 of FIG. 4.

The multi-modality sensor 200 may combine image information and radar information into a combined time-synchronized data. The multi-modality sensor 200 may control the first sampling rate corresponding to the image sensor 250 and the second sampling rate corresponding to the radar sensor 230 based on the clock signal and the source signal, thereby combining the first data of the image sensor 250 and the second data of the radar sensor 230 into the combined synchronized data. For example, using the example of FIG. 4, the multi-modality sensor 200 may sample the second data of the radar sensor 230 at the second sampling rate by using the down-sampling circuit 434-2.

Alternatively, the multi-modality sensor 200 may receive a trigger signal from an external heterogeneous sensor or homogeneous sensor. The multi-modality sensor 200 may control the first sampling rate corresponding to the image sensor 250 and the second sampling rate corresponding to the radar sensor 230 based on the trigger signal, thereby combining the first data and the second data into a combined synchronized data. The multi-modality sensor 200 may set the first sampling rate and the second sampling rate to be the same or may set the first sampling rate and the second sampling rate to be integer multiples of any one of the sampling rates. A heterogeneous sensor may refer to a different type of sensor, such a non-multi-modality sensor like a single modality image or radar sensor, while a homogenous sensor may refer to another multi-modality sensor 200.

The transmission module may transmit the combined time-synchronized data. As a non-limiting example, and as shown and discussed below with respect to FIG. 4, the transmission module may include, for example, an external I/F circuit (e.g., a mobile industry processor interface (MIPI) camera serial interface (CSI) D-PHY circuit), but examples are not limited thereto. As a non-limiting example, the external I/F circuit may correspond to the external I/F circuit 436 of FIG. 4. The external I/F circuit may be included in a display serial interface (DSI) module of an MIPI standard and may be responsible for transmitting commands and data to external devices and other DSI modules. Since the commands are transmitted in various methods depending on the type of data, the external I/F circuit 436 may efficiently transmit the commands. Hereinafter, references to the external I/F circuit may be simplified and expressed as a "D-PHY circuit".

Depending on examples, the multi-modality sensor 200 may also or alternatively provide a driving reference signal (e.g., such as a trigger signal) for time synchronization with at least one sensor of an external heterogeneous sensor or homogeneous sensor.

According to one or more examples, due to at least a portion of the image sensor 250 and at least a portion of the radar sensor 230 being variously configured with respect to a single chip, such as where at least a portion of the image sensor 250 and the RFIC 235 of the radar sensor 230 are variously configured as a single chip, and because the image sensor 250 and the radar sensor may have aligned fields-of-view (FoVs) with a common origin, location corrections between information from the respectively captured image and radar data of the multi-modality sensor 200 may not be needed, compared to previous approaches of FIG. 1A where the separate image sensor 110 and separate radar sensor 130 would require such location corrections by subsequent post-sensor processing.

In addition, due to such example configurations of various embodiments, the multi-modality sensor 200 may control and synchronize a transmission rate of signals from the image sensor 250 and the radar sensor 230, thereby providing synchronized information.

For example, in an example the multi-modality sensor 200 may combine the first data of the image sensor 250 and the second data of the radar sensor 230 into a combined synchronized data and may output one signal, with both of the first and second data, that may be time-synchronized for a scene, such as for the scene directly in front of the vehicle, thereby improving performance of perception, tracking, and/or detection of dangerous target objects moving at high speed.

Additionally, in various embodiments, the multi-modality sensor 200 may reduce a total form factor, compared to the previous approach of FIG. 1A, by combining and packaging at least portions of the image sensor 250 and at least portions of the radar sensor 230 as a single chip. In addition, with this single chip configuration, the multi-modality sensor 200 may increase the degree of freedom in antenna arrangement and may also reduce costs due to system simplification compared to the previous approach of FIG. 1A.

FIG. 2E illustrates an example of the FoVs of a multi-modality sensor.

The multi-modality sensor 200 may combine the first data of the image sensor 250 and the second data of the radar sensor 230 into the combined time-synchronized data and may transmit the combined time-synchronized data. Here, "combining" the first data and the second data may not include modifying or changing the first data and the second data to generate new third data, but may rather include concatenating the first data and the second data. Therefore, the combined data may have a sequentially combined form, for example, |first data||second data|, but is not necessarily limited thereto. Since the combination of the first data and the second data is a simple combination of data, the combination may be performed by the multi-modality sensor 200 without a separate processor. Alternatively, depending on examples, the process of combining the first data and the second data may be performed by a processor such as a microprocessor unit (MPU) of the multi-modality sensor 200.

As shown in FIG. 2E, the combined data time-synchronized by the multi-modality sensor 200 may also be aligned, for example, with respect to respective field of views (FoVs) of the image sensor 250 and the radar sensor 230, which are respectively reflected in the image frame included in the first data and corresponding radar data included in the second data. For example, the FoV of the image sensor 250 may vary depending on the size of the image sensor 250 and a lens ratio of camera lens incorporated with the sensor array 255. For example, the FoV of the image captured by the image sensor 250 may be obtained by sensor size (H or V) divided by lens magnification.

The combined time-synchronized data may include at least one respective information of a direction vector, speed, or three-dimensional location including an angle and a distance from the multi-modality sensor 200 to a target object, but examples are not necessarily limited thereto.

In an example, due to the structure of the multi-modality sensor 200 that is variously configured as a single chip by co-arranging and/or stacking at least portions of the image sensor 250 and at least portions of the radar sensor 230, in a high-speed and complex moving environment, a detection area (e.g., the respective FoVs) and time registration (e.g., respective frame rates) of the two pieces of information (e.g., the first data of the image sensor 250 and the second data of the radar sensor 230) may correspond to each other, thereby accurately aligning the two pieces of information.

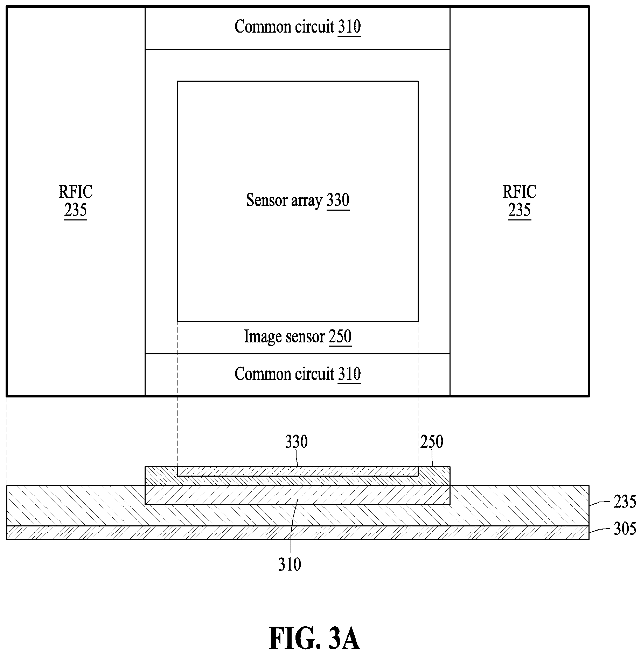

FIG. 3A illustrates an example of a configuration of a multi-modality sensor. As a non-limiting example, the multi-modality sensor may be the multi-modality sensor 200 of FIGS. 2B and 2C, and thus, while the below description with respect to FIG. 3A will refer to the multi-modality sensor 200, this is merely for convenience of explanation and examples are not limited thereto. The image sensor 250 according to an example is arranged on the upper portion of the multi-modality sensor, and the RFIC 235 of a radar sensor is arranged in the lower portion of the multi-modality sensor.

As shown in the diagram 300, the image sensor 250 may include a sensor array 330 and may be stacked on an upper portion of the radar sensor. The radar sensor may include the RFIC 235 formed on a substrate 305.

The image sensor 250 and the RFIC 235 may be configured as a single chip on the substrate 305 based on silicon, as discussed above. Here, the image sensor 250 may be stacked on an upper portion of the RFIC 235 in a stack structure by bonding silicon chips to generate the single ship on the substrate 305. Accordingly, the radar sensor including the RFIC 235 and the image sensor 250 may be configured as the single chip on the substrate 305 based on silicon.

In an example, for this single chip configuration, the image sensor 250 and the RFIC 235 may be configured on or inside a printed circuit board (PCB) or a ceramic substrate in addition to a silicon-based substrate, or may also be configured as a single chip in the form of an SIP or a chiplet package.

FIG. 3B illustrates an example of a configuration of a multi-modality sensor including an antenna array. As a non-limiting example, the multi-modality sensor may be the multi-modality sensor 200 of FIG. 2D or the multi-modality sensor 200 of FIG. 3A. Accordingly, while the below description with respect to FIG. 3B will refer to the multi-modality sensor 200, this is merely for convenience of explanation and examples are not limited thereto. The multi-modality sensor 200 of FIG. 3B includes an antenna in package (AIP) structure in which an antenna module 340 including an antenna array according to an example is implemented on a chip of the multi-modality sensor 200 is illustrated. Here, the antenna module 340 may be implemented/mounted on a circuit board of the radar sensor including an RFIC, such as the RFIC 235 of FIG. 2D, as a non-limiting example.

The multi-modality sensor 200 may include the radar sensor including the example RFIC 235 formed on the substrate 305, the image sensor 250 stacked on an upper portion of the radar sensor and including the sensor array 330, and the antenna module 340 having a plurality of antennas 320 arranged around the sensor array 330.

The sensor array 330 is arranged between the plurality of antennas 320, and the sensor array 330 and the plurality of antennas 320 may be configured in the form of a single chip structure (e.g., an AIP structure). Here, a first sampling rate corresponding to first data of the image sensor 250 and a second sampling rate corresponding to second data of the radar sensor may correspond to each other. The multi-modality sensor 200 may combine the first data of the image sensor 250 and the second data of the radar sensor into combined time-synchronized data. The combined time-synchronized data may be aligned according to an FoV within an image frame of the image sensor 250.

FIG. 3C illustrates example arrangements of an antenna array in a multi-modality sensor module. As a non-limiting example, the multi-modality sensor may be the multi-modality sensor 200 of FIG. 2D, and thus, while the below description with respect to FIG. 3C will refer to the multi-modality sensor 200, this is merely for convenience of explanation and examples are not limited thereto. For example, in illustration (a) of FIG. 3C, antenna arrays 341 and 343 included in a corresponding antenna module 340 are arranged to at least partially surround at least the sensor array 330 of the multi-modality sensor 200 in a first lateral direction. In illustration (b) of FIG. 3C, antenna arrays 342 and 344 included in a corresponding antenna module 340 are arranged to at least partially surround at least the sensor array 330 of the multi-modality sensor 200 in a second lateral direction (e.g., perpendicular to the first lateral direction, as a non-limiting example). Illustration (c) of FIG. 3C, demonstrates the use of the AIP structure of FIG. 3B in which the antenna module 340 according to an example is implemented in the chip of the multi-modality sensor 200.

Referring to the first lateral direction arrangement of illustration (a) of FIG. 3C, the sensor array 330 of the image sensor may be arranged between the antenna array 341 and the antenna array 343 arranged in the first lateral direction. In addition, referring to the second lateral direction arrangement of illustration (b) of FIG. 3C, the sensor array 330 of the image sensor may be arranged between the antenna array 342 and the antenna array 344 arranged in the second lateral direction.

The circuitry and other components of the multi-modality sensor 200 may be arranged on a substrate of the multi-modality sensor 200, for example, as a PCB and may use a metal pattern of the PCB to configure the corresponding antenna module(s) 340. Accordingly, depending on arrangement, signals transmitted from the multi-modality sensor 200 may be radiated by the respective antenna modules 340 and signals reflected by an object may also be received by the respective antenna modules 340. With each of the arrangements (a) through (c) of FIG. 3C, the antenna(s) that radiates an example signal from the antenna module 340 may receive the corresponding reflected signal, and/or different antennas (e.g., a transmission antenna and a different reception antennal) may be used for respectively radiating another example signal and receiving the corresponding other reflected signal.

In an example, the arrangements of illustrations (a) and (b) of FIG. 3C may be combined, such that the corresponding antenna model 340 includes antenna arrays 341 and 343 arranged to at least partially surround at least the sensor array 330 of the multi-modality sensor 200 in the first lateral direction and the antenna arrays 342 and 344 arranged to at least partially surround at least the sensor array 330 of the multi-modality sensor 200 in the second lateral direction. As a non-limiting example, with such a combined arrangement a signal of the radar sensor may be radiated with directivity toward a target object located in a corresponding direction.

The respective multiple antennas of each of the antenna arrays 341, 342, 343, and 344 may be arranged in a form of steps or may be arranged in a form of a same line. Various embodiments exist with varying arrangement forms of the respective multiple antennas depending on a corresponding area in which the respective multiple antennas are to detect (e.g., an exterior area from which the reflected signal is to be detected), as well as depending on various available detecting approaches that may be implemented to detect the reflected signal.

FIG. 4 illustrates an example of a configuration of a multi-modality sensor. As a non-limiting example, the multi-modality sensor may be the multi-modality sensor 200 of FIG. 2D, or correspond to a configuration of any one or any combination of the multi-modality sensors described herein. Accordingly, while the below description with respect to FIG. 4 will refer to the multi-modality sensor 200 and a RFIC 235 that may correspond to the RFIC 235 of FIG. 2D, these references are merely for convenience of explanation and examples are not limited thereto.

As described above, the multi-modality sensor 200 may implement a CIS within a camera and the RFIC 235 within the radar sensor in a single chip, as discussed above, such as with a single chip using a substrate based on silicon or in a form of a SIP or a chiplet package.

The sensor array 255 (e.g., a CMOS photo sensor array, such as a CMOS image diode array) of the image sensor may be included in an upper portion 410 of the multi-modality sensor 200. A lower portion 430 may include a readout circuit, a control logic circuit 431 for transmitting a control signal to read out a signal of the CMOS image diode array, and decoders 432 (row decoders), and a clock generator 433 of the sensor array 255, the RFIC 235 of the radar sensor, and the first ADC 434-1, the down-sampling circuit 434-2, and the external I/F circuit 436.

The upper portion 410 and the lower portion 430 of the multi-modality sensor 200 may be solder-bonded together at a wafer level or a chip level and wiring may be also implemented through interconnection. The image sensor, more specifically, information of the sensor array 255 and information of the RFIC 235 may be combined and transmitted as combined data or information of the image sensor and the information of the RFIC 235 may be transmitted as synchronized individual signals. Herein, the transmitted information of the image sensor may have a format such as YUV (YIQ/YCbCr/YPbPr), red/green/blue (RGB), YUUV, and a bit signal, as non-limiting examples.

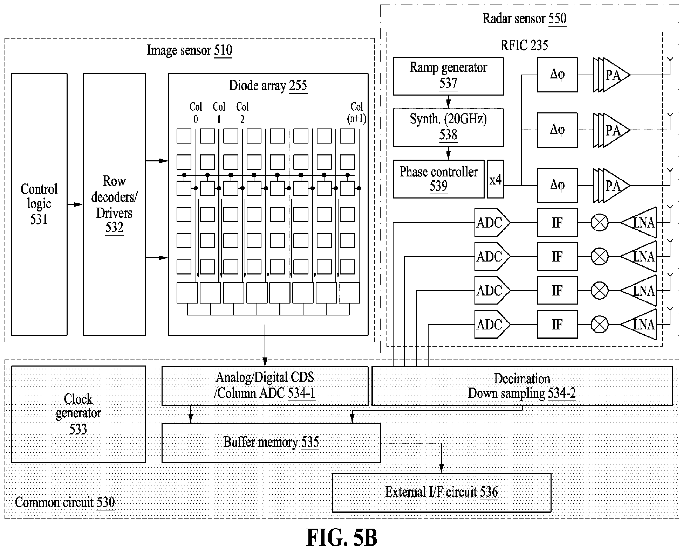

In an alternative example, such as illustrated in FIG. 5B, the upper portion 410 of the multi-modality sensor 200 may include the CMOS image diode array, the control logic circuit 431 for transmitting a control signal to read out a signal of the CMOS image diode array, and the decoders 432 (row decoders). Depending on examples, the control logic circuit 431 and the decoder 432 may be arranged in a common circuit, which is described further below.

An analog signal transmitted and received by the RFIC 235 may be converted into a digital signal by a second ADC included in the RFIC 235 of FIG. 4. The digital signal may be transmitted to the outside through a buffer memory 435 (e.g., a column memory) and the external I/F circuit 436. The signal transmitted through the buffer memory 435 may be transmitted to a vehicle control unit (VCU), a zone controller, a central control unit (CCU), or a zonal control unit (ZCU) of the vehicle.

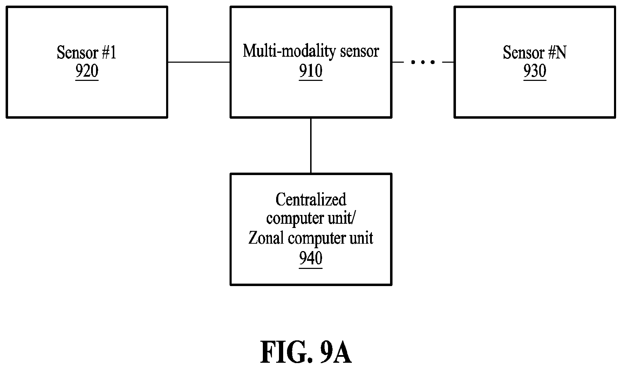

In an example the signal transmitted through the buffer memory 435 may be transmitted to the CCU or ZCU of the vehicle, as included in some embodiments and represented by the vehicle of FIG. 1A or FIG.9A, by a processor comprised in the multi-modality sensor 200, for example.

The sensor system including the multi-modality sensor 200 may replace individual single-modality sensors (e.g., camera sensors and radar sensors) mounted on an ADAS or autonomous driving vehicle, such as those represented in FIG. 1A. Information received from the image sensor and the radar sensor of the multi-modality sensor may be transmitted to the processor in a synchronized form. As a non-limiting example, the signal transmitted to the processor may have a completely aligned FoV within a CIS image frame and may include information such as the distance, angle, and speed to a target object to be detected.

More specifically, the control logic circuit 431 in the lower portion 430 of the multi-modality sensor 200 may generate and transmit a control signal for reading out a first signal of the sensor array 255. The control logic circuit 431 may be, for example, a micro control unit (MCU) but is not necessarily limited thereto.

The control logic circuit 431 may transmit a wake-up signal to the RFIC 235. When the control logic circuit 431 receives a specific response from the RFIC 235 according to the transmission of the wake-up signal, the control logic circuit 431 may transmit parameter setting values for various radar radiation signals to the RFIC 235. The RFIC 235 may store the parameter setting values in the memory and may transmit chirp signals of a specific pattern through the antennas of the radar sensor based on the stored parameter setting values. Here, the parameter setting values may include at least one of the number of chirp signals, whether the radar sensors are synchronized with one another, a sampling rate of the radar sensors, a range resolution of the radar sensors, a Doppler resolution of the radar sensors, a bandwidth (BW) of the radar sensors, the maximum sensing distance of the radar sensors, a sensing area of the radar sensors, an active damping control (ADC) start time, an idle time of the radar sensors, a ramp end time, a ramp slope, a frequency-modulated (FM) slope, the number of consecutive radar sensors, and/or the number of transmission antennas used for a time division mode, but examples are not limited thereto.

The decoder 432 may decode the analog signal of the sensor array 255. The first ADC 434-1 may convert the decoded analog signal into a digital signal. The first ADC 434-1 may perform, for example, analog/digital correlated double sampling (CDS) and column ADC. Here, the clock generator 433 may generate a clock signal for reading out the first signal (e.g., image information) from the sensor array 255.

The multi-modality sensor 200 may extract image information by sequentially transmitting image information detected by the sensor array 255 of the upper portion 410 by the control logic circuit 431 and the decoder 432 to the first ADC 434-1.

In addition, the multi-modality sensor 200 may extract radar information using the RFIC 235. More specifically, the ramp generator 437 may generate a source signal for the radar sensor. The frequency band of the source signal generated by the ramp generator 437 may be changed by the synthesizer 438. The source signal may have a frequency band as high as 20 gigahertz (GHz), for example. The phase controller 439 may generate a radiation signal in a frequency band in which a signal with a changed frequency band is up-converted by, for example, a multiple of 4 (x4). For example, the radiation signal may be a signal with a frequency in the 76 to 81 GHz band.

The multi-modality sensor 200 may load phase information into the radiation signal and may radiate a signal with increased output through a PA to the outside through an antenna. The multi-modality sensor 200 may detect a reflection signal (a fine signal) in which a signal radiated to the outside by an LNA is reflected by hitting a target object and may amplify the output of the reflection signal. The IF circuit may extract a signal from the radar sensor by extracting the original signal (e.g., the source signal) transmitted from the amplified reflection signal and then converting the original signal into a digital signal by the second ADC.

The sensor array 255 and the RFIC 235 of the multi-modality sensor 200 may commonly receive the source signal generated by the ramp generator 437 and the clock signal generated by the clock generator 433 and may synchronize the received signals into one. The multi-modality sensor 200 may transmit the synchronized signals to a processor or a central computer through a transmission line of the external I/F circuit 436 such as MIPI CSI D-PHY or gigabit ethernet.

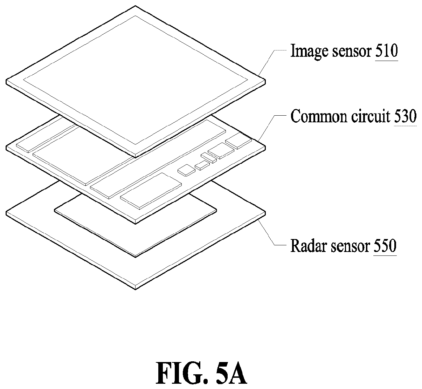

FIG. 5A illustrates an example of an exploded perspective view of a multi-modality sensor, and FIG. 5B illustrates an example of a configuration of a multi-modality sensor. As a non-limiting example, the multi-modality sensor of FIG. 5B may be the same multi-modality sensor of FIG. 5A. As another non-limiting example, the multi-modality sensor of FIGS. 5A and/or 5B may be the multi-modality sensor 200 of FIG. 2D, or correspond to a configuration of any one or any combination of the multi-modality sensors described herein. Accordingly, while the below descriptions with respect to FIG. 5A and 5B may refer to a RFIC 235, which may correspond to the RFIC 235 of FIG. 2D, and a sensor array 255, which may correspond to the sensor array 255 of FIG. 2D, these references are merely for convenience of explanation and examples are not limited thereto.

Referring to FIGS. 5A and FIG. 5B, the respective multi-modality sensors may each include an image sensor 510, a common circuit 530, and a radar sensor 550.

As illustrated in FIG. 5A, the image sensor 510, including the sensor array 255, may be stacked on an upper portion of the common circuit 530, which may be stacked on an upper portion of the radar sensor 550, thereby configuring the image sensor 510, the common circuit 530, and the radar sensor 550 as a single chip.

With respect to FIG. 5B, the control logic 531, the row decoders/drivers 532, diode array 255 of the image sensor 510, the ramp generator 537, synthesizer 538, phase controller 539 and remaining components of the RFIC 235 of the radar sensor 550, and the clock generator 533, analog/digital CDS/Column ADC 534-1, decimation down sampling circuitry 534-2, buffer memory 535, and external I/F circuit 536 of the common circuit 530 may have like respective configurations and perform like respective operations as the control logic 431, the row decoders/drivers 432, diode array 255, ramp generator 437, synthesizer 438, phase controller 439 and remaining components of the RFIC 235, clock generator 433, analog/digital CDS/Column ADC 434-1, decimation down sampling circuitry 434-2, buffer memory 435, and external I/F circuit 436 of FIG. 4, and thus the corresponding descriptions above with respect to FIG. 4 are also applicable to FIG. 5B and therefore not repeated here.

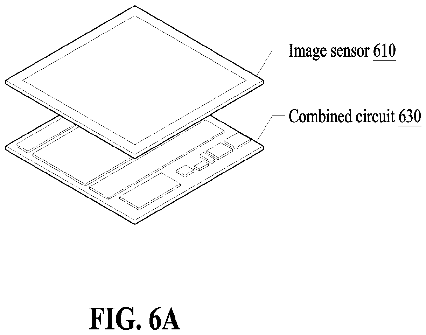

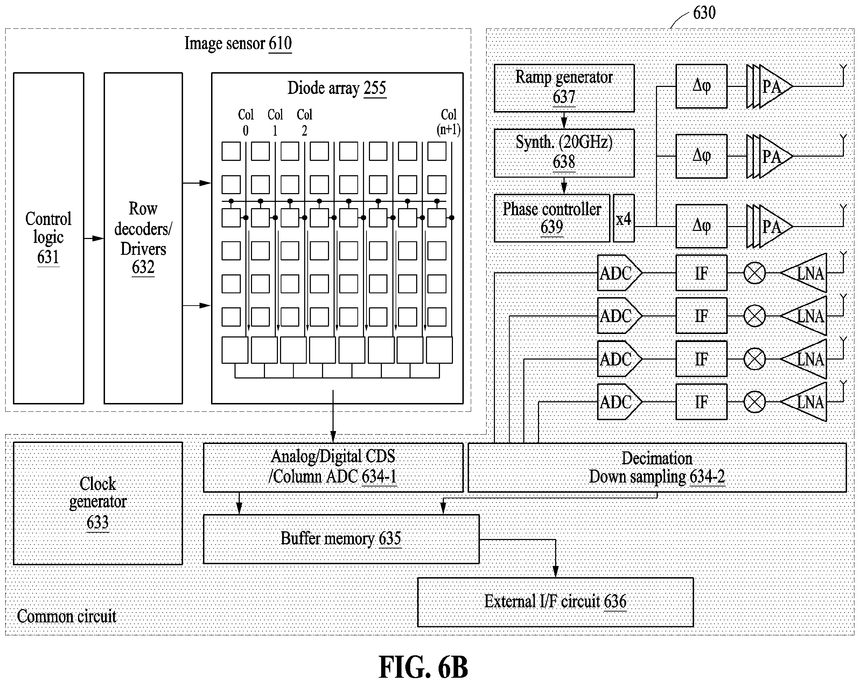

FIG. 6A illustrates an example exploded perspective view of a multi-modality sensor, and FIG. 6B illustrates an example configuration of a multi-modality sensor. As a non-limiting example, the multi-modality sensor of FIG. 6B may be the same multi-modality sensor of FIG. 6A. As another non-limiting example, the multi-modality sensor of FIGS. 6A and/or 6B may be the multi-modality sensor 200 of FIG. 2D, or correspond to a configuration of any one or any combination of the multi-modality sensors described herein.

Referring to FIG. 6A and FIG. 6B, the respective multi-modality sensors may include an image sensor 610 and a combined circuit 630. As a non-limiting example, the combined circuit 630 may be a combination of the common circuit 530 and the radar sensor 550 described above with reference to FIG. 5A, and thus corresponding descriptions are not repeated here.

Compared to FIG. 5A, in the multi-modality sensor of FIG. 6A, the common circuit may be arranged on a same substrate as the radar sensor to form one combining circuit 630.

With respect to FIG. 6B, the control logic 631, the row decoders/drivers 632, diode array 255 of the image sensor 610, and the ramp generator 637, synthesizer 638, phase controller 639, remaining components of the RFIC 235, clock generator 633, analog/digital CDS/Column ADC 634-1, decimation down sampling circuitry 634-2, buffer memory 635, and external I/F circuit 636 of the combined circuit 630 may have like respective configurations and perform like respective operations as the control logic 431, the row decoders/drivers 432, diode array 255, ramp generator 437, synthesizer 438, phase controller 439 and remaining components of the RFIC 235, clock generator 433, analog/digital CDS/Column ADC 434-1, decimation down sampling circuitry 434-2, buffer memory 435, and external I/F circuit 436 of FIG. 4, and thus the corresponding descriptions above with respect to FIG. 4 are also applicable to FIG. 6B and therefore not repeated here.

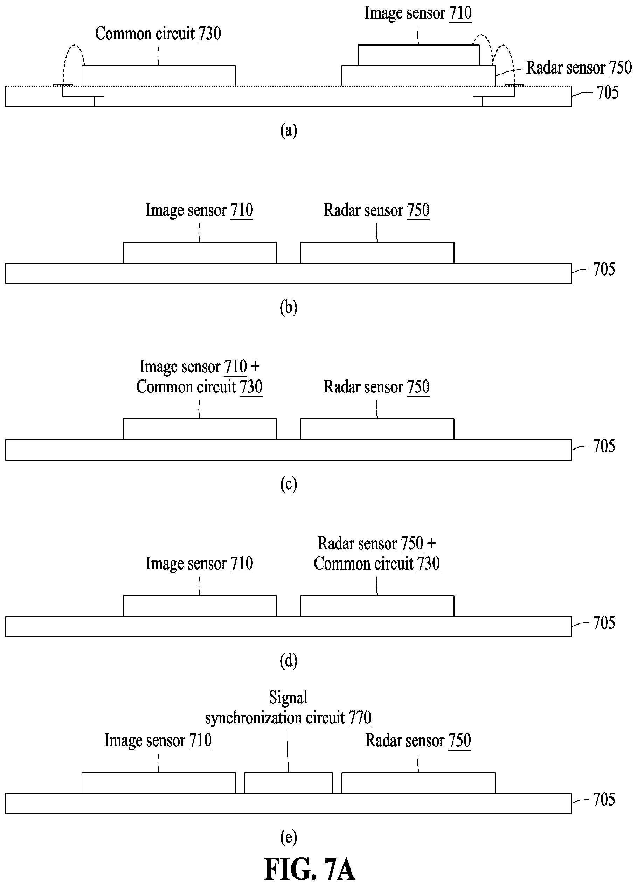

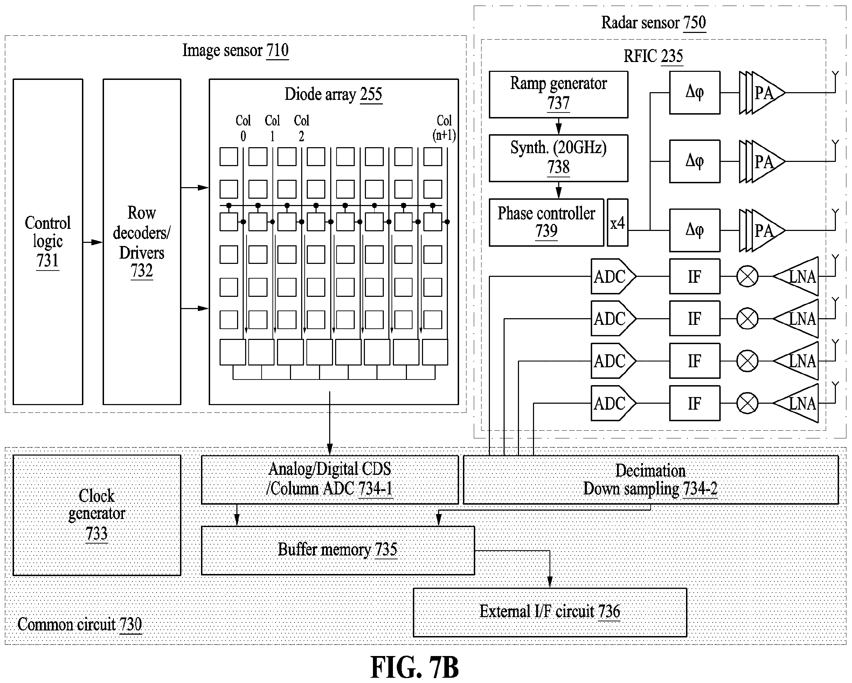

FIGS. 7A and 7B illustrate various multi-modality sensor configurations. As a non-limiting example, the multi-modality sensors of FIGS. 7A and 7B may be the multi-modality sensor 200 of FIGS. 2B through 2D, or correspond to a configuration of any one or any combination of the multi-modality sensors described herein.

Referring to illustrations (a) through (d) of FIG. 7A and FIG. 7B, the corresponding multi-modality sensors may variously include an image sensor 710, a common circuit 730, and a radar sensor 750 respectively arranged on a substrate 705. In addition, referring to illustration (e) of FIG. 7A, the corresponding multi-modality sensor may further include an image sensor 710, a radar sensor 750, and a signal synchronization circuit 770.

As demonstrated in illustration (a) of FIG. 7A and represented in FIG. 7B, the image sensor 710 and the radar sensor 750 may have a structure in which the radar sensor 750 is arranged on (e.g., directly on) the substrate 705, while the image sensor 710 is stacked on (e.g., directly on) the radar sensor 750. The common circuit 730 may also be arranged on (e.g., directly on) the substrate 705, though separated from the radar sensor 750. As a non-limiting example, the common circuit 730 may also be arranged to wholly or partially surround the stacked radar sensor 750 and image sensor 710.

Differently, as demonstrated in illustrations (b) through (d) of FIG. 7A, the image sensor 710 and the radar sensor 750 may be arranged side by side on (e.g., directly on) the substrate 705. Illustration (c) of FIG. 7A demonstrates a configuration where the image sensor 710 may be combined with the common circuit 730, while illustration (d) of FIG. 7A demonstrates a configuration where the radar sensor 750 may be combined with the common circuit 730. Alternatively, illustration (e) of FIG. 7A demonstrates a configuration where the image sensor 710 and the radar sensor 750 are arranged further apart on (e.g., directly on) the substrate 705, with a signal synchronization circuit 770 being arranged between the image sensor 710 and the radar sensor 750 on (e.g., directly on) the substrate 705.

With respect to FIG. 7B, the control logic 731, the row decoders/drivers 732, diode array 255 of the image sensor 710, the ramp generator 737, synthesizer 738, phase controller 739 and remaining components of the RFIC 235 of the radar sensor 750, and the clock generator 733, analog/digital CDS/Column ADC 734-1, decimation down sampling circuitry 734-2, buffer memory 735, and external I/F circuit 736 of the common circuit 730 may have like respective configurations and perform like respective operations as the control logic 431, the row decoders/drivers 432, diode array 255, ramp generator 437, synthesizer 438, phase controller 439 and remaining components of the RFIC 235, clock generator 433, analog/digital CDS/Column ADC 434-1, decimation down sampling circuitry 434-2, buffer memory 435, and external I/F circuit 436 of FIG. 4, and thus the corresponding descriptions above with respect to FIG. 4 are also applicable to FIG. 7B and therefore not repeated here.

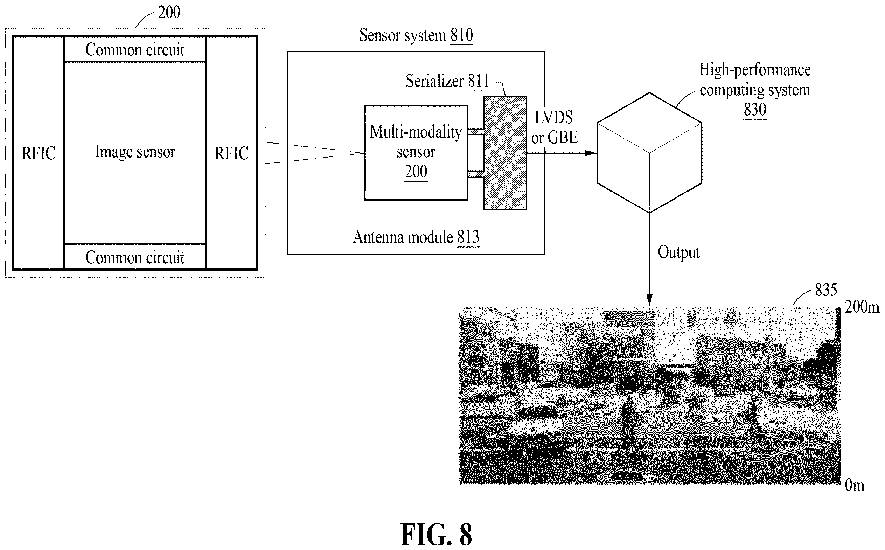

FIG. 8 illustrates an example of a sensor system including a multi-modality sensor and a computing system. In an example, the computing system may include the sensor system. As a non-limiting example, the multi-modality sensor of FIG. 8 may be the multi-modality sensor 200 of FIGS. 2B through 2D, or correspond to a configuration of any one or any combination of the multi-modality sensors described herein. Accordingly, while the below description with respect to FIG. 8 will refer to the multi-modality sensor 200, as well as an image sensor 250 and RFIC 255 which may correspond to the image sensor 250 and RFIC 235 of FIGS. 2C and 2D, as non-limiting examples, these references are merely for convenience of explanation and examples are not limited thereto. Referring to FIG. 8, a sensor system 810 according to an example may include the multi-modality sensor 200 and an antenna module 813, which may be an antenna digital circuit board as a non-limiting example. As another non-limiting example, the antenna module 813 may correspond to any of the antenna modules 340 of FIG. 3B or 3C.

The multi-modality sensor 200 may include a radar sensor including the RFIC 235, and the image sensor 250 including a sensor array stacked on an upper portion of the radar sensor and configured in a single chip, as variously discussed above with respect to FIGS. 2A through 7B, with the RFIC.

The antenna module 813 may include an antenna array including a plurality of antennas, may be controlled by the radar sensor to radiate a first signal from the multi-modality sensor 200, and may be controlled to detect/receive a second signal (e.g., a reflected signal of the first signal). Here, various embodiments exist with varying arrangements (e.g., the various arrangements of FIG. 3C) of the plurality of antennas, which may depend on different exterior areas in which the plurality of antennas are to detect reflected signals (e.g., a horizontal direction, a vertical direction, front, or rear) and/or the corresponding detection method(s) of detecting the reflected signals.

The multi-modality sensor 200 may control the first sampling rate corresponding to the image sensor 250 and the second sampling rate corresponding to the radar sensor based on the clock signal for the image sensor 250 and the source signal for the radar sensor, and may combine the first data of the image sensor 250 and the second data of the radar sensor into a combined time-synchronized data.

In addition, the sensor system 810 may further include a serializer 811 that is a circuit configured to convert a parallel first signal transmitted/provided from the multi-modality sensor 200 into a time-ordered serial signal.

Embodiments include a vehicle (e.g., alike the vehicle of FIG. 1A but with at least one or more multi-modality sensor(s) 200 in various forward, side, and rear detection arrangements) where the sensor system 810 may be mounted on the vehicle and may transmit/provide the combined time-synchronized data to a high-performance computing system 830. In an example, the vehicle may be an ADAS or autonomous driving vehicle. The combined time-synchronized data may be analyzed and displayed by the high-performance computing system 830 as, for example, an 8M-level 16-bit RGB image 835 using a display represented by the high-performance computing system 830 and the illustrated image 835. Here, the high-performance computing system 830 may generate the image 835 to include, for example, a viewing range, an angle, and/or speed information, as non-limiting examples, of the vehicle as well as with respect to objects detected in the corresponding field of views of the image sensor and/or radar sensor, for example. Because of the alignment of the respective fields of view of the image sensor and the radar sensor (e.g., with a common origin), and the image sensor and the radar sensor being both configured in the multi-modality sensor 200 with common hardware for time synchronization, the image 835 may be a pixel-aligned and frame-synchronized image. The high-performance computing system 830 may be mounted in the vehicle, or may be disposed in a cloud server outside the vehicle and provide the image 835 to the display of the vehicle.

FIG. 9A illustrates an example of a signal coupling method between a multi-modality sensor and other sensors. Referring to FIG. 9A, a diagram 900 showing a connection structure between a multi-modality sensor 910 and other sensors 920 and 930 according to an example is illustrated. As a non-limiting example, the multi-modality sensor 910 of FIG. 9A may be the multi-modality sensor 200 of FIGS. 2B through 2D, or correspond to a configuration of any one or any combination of the multi-modality sensors described herein.

For example, a sensor system (e.g., of a vehicle) includes a plurality of sensors 920 and 930 including the multi-modality sensor 910. In various examples, either or both of the plurality of sensors 920 and 930 may be homogeneous sensors with the multi-modality sensor 910 (e.g., also any of the multi-modality sensors described herein), and either or both of the plurality of sensors 920 and 930 may be heterogeneous sensors (e.g., single modality or other sensors other than the multi-modality sensors described herein).

In a typical sensor system, with the same or different types of sensors, signals between the typical sensors may be not synchronized, so that different information may be provided for the same detection area, which may cause a decrease in recognition performance.

The multi-modality sensor 910 may provide a trigger signal (or trigger information) for the other sensors 920 and 930 or may receive the trigger signal from the other sensors 920 and 930 (e.g., such as when any of the other sensors 920 and 930 are the homogenous sensors, as a non-limiting example) to control the timing of an image frame or a radiation signal.

In addition, in the typical sensor system, the respective detection signals of the sensors may be individually transmitted to a corresponding CCU/ZCU, but in this case and as a non-limiting example, there may need to be as many input/output (I/O) ports in the corresponding CCU/ZCU as the number of the sensors, which may be a performance limiting factor in terms of system size or control.

Rather, in an example, the other sensors 920 and 930 may be configured to transmit information to the multi-modality sensor 910 and the multi-modality sensor 910 may be configured to receive and collect the transmitted information with information of the multi-modality sensor 910 to transmit the collected information to the CCU/ZCU 940. In this case, the CCU/ZCU 940 may receive information from three sensors (i.e., the multi-modality sensor 910 and the sensors 920 and 930) through one port connected to the multi-modality sensor 910.

For example, the multi-modality sensor 910 may receive heterogeneous data from one or more external heterogeneous sensors for data streaming and may transmit the received heterogeneous data to the CCU/ZCU 940 through one communication module.

Rather, as noted, in the typical sensor system in which signals are processed in a centralized method for multiple sensors, all data received from the multiple sensors may be transmitted to the corresponding CCU/ZCU through individual connectors. In this case, complexity and size of a system on chip (SoC) for signal processing in the centralized method may increase.

The multi-modality sensor 910 according to an example may receive data received from the outside through an internal communication module of the multi-modality sensor 910, may integrate the received data, and may transmit the data to an SoC or zonal unit of the vehicle for centralized signal processing. Here, the form of data transmitted by the multi-modality sensor 910 may be, for example, low-voltage differential signaling (LVDS), controller area network (CAN), CAN flexible data-rate (CAN-FD), and/or gigabit ethernet but are not necessarily limited thereto.

Rather than the vehicle being an ADAS function or autonomous driving vehicles, or a non-ADAS/autonomous automobile, example embodiments include the vehicle with the multi-modality sensor being an industrial robot or drone, as non-limiting examples.

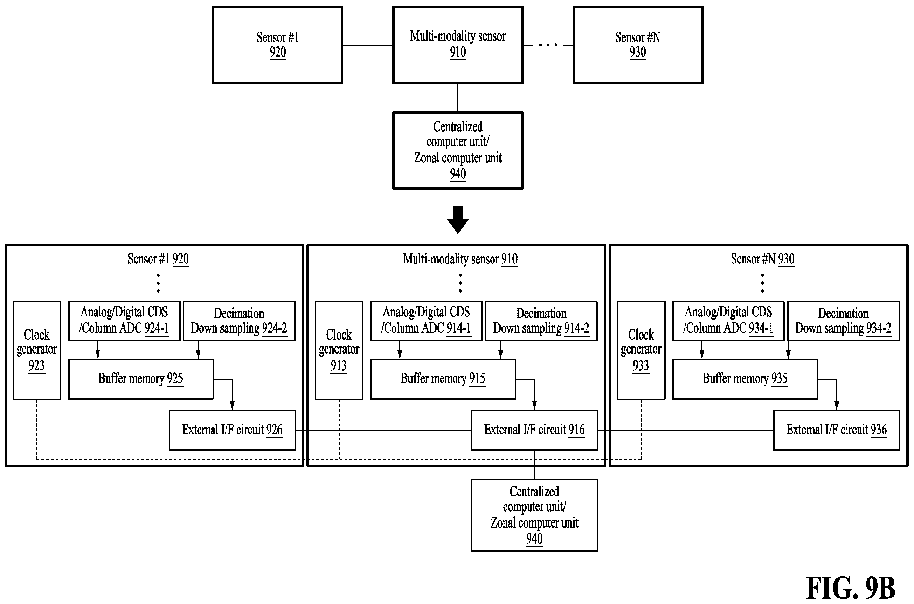

FIG. 9B illustrates an example of a data transmission method between a multi-modality sensor and other sensors. Referring to FIG. 9B, the multi-modality sensor 910 according to an example transmits data received from other sensors (e.g., the other sensor 920 and 930 of FIG. 9A) to a CCU/ZCU (e.g., the CCU/ZCU 940 of FIG. 9A) through a synchronized clock. As a non-limiting example, the multi-modality sensor 910 of FIG. 9B may be the multi-modality sensor 200 of FIGS. 2B through 2D and/or 9A, or correspond to a configuration of any one or any combination of the multi-modality sensors described herein. Accordingly, while the below description with respect to FIG. 9B will refer to the multi-modality sensor 910 and other sensors 920 and 930 of FIG. 9A, these references are merely for convenience of explanation and examples are not limited thereto

The multi-modality sensor 910 may be driven by an external trigger signal or the multi-modality sensor 910 may externally or internally provide a driving reference signal for time synchronization. The multi-modality sensor 910 may provide the driving reference signal for time synchronization with the other sensors 920 and 930 (e.g., at least one sensor of an external heterogeneous sensor or homogeneous sensor).

The multi-modality sensor 910 may receive one or more pieces of data from the other sensors 920 and 930, may collect the received pieces of data, and may transmit the data to the CCU/ZCU 940 through the same or smaller number of lines. Here, the multi-modality sensor 910 may operate as a master device for the other sensors 920 and 930. The multi-modality sensor 910 may transmit a clock or a specific synchronization signal generated by a clock generator 913 for synchronization with the other sensors 920 and 930 to the other sensors 920 and 930 or clock generators 923 and 933 of the other sensors 920 and 930. The other sensors 920 and 930 may transmit time-synchronized data based on a clock for synchronization or the specific synchronization signal to external I/F circuits 926 and 936 of the multi-modality sensor 910, which is the master device, through the external I/F circuits 926 and 936. The multi-modality sensor 910 may combine and/or synchronize time-synchronized data received from the other sensors 920 and 930 and may transmit the data to the CCU/ZCU 940 through one line connected to the external I/F circuits 926 and 936.

Here, the data transmitted to the CCU/ZCU 940 may be data in which information such as detection information about a target object that is signal-processed by an RFIC, tracking information, distance to the target object, and angles are arranged point by point in at least a same overlapping FoV area in an image frame detected by the image sensor. In addition, the data transmitted to the CCU/ZCU 940 may include information such as the distance, angle, speed, and point to a target object detected from the image, which are arranged together to be provided.

The multi-modality sensors, image sensors, radar sensors, sensor arrays, diode arrays, readout circuits, RFOC circuits, antennas, antenna modules, antenna arrays, control logic circuits, row decoders/drivers circuits, clock generators, common circuits, combined circuits, analog/digital CDS/column ADCs, buffer memories, decimation down sampling circuits, external I/F circuits, ramp generators, synthesizers, phase controllers, ADS, power amplifiers, Ifs, LNAs, sensor systems, serializer, LVDS, GBE, high-performance computing system, display, heterogeneous sensors, homogeneous sensors, centralized computer unit, and zonal computer unit, as non-limiting examples, described herein, included in descriptions with respect to respect to FIGS. 1A-9B, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1A-9B that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations).

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above and all drawing disclosures, the scope of the disclosure is also inclusive of the claims (i.e., all variations within the scope of the claims are to be construed as being included in the disclosure).

## Claims

1. A multi-modality sensor comprising:
a radio detection and ranging, radar, sensor including a radio-frequency integrated circuit, RFIC; and
an image sensor, including a sensor array, stacked on a portion of the radar sensor, with at least a circuitry portion of the image sensor being configured in a single chip with the RFIC.

2. The multi-modality sensor according to claim 1, wherein the single chip includes the image sensor and the RFIC being configured as the single chip using a same substrate, or configured as the single chip in a form of a system in package, SIP or a chiplet package.

3. The multi-modality sensor according to claim 1 or 2, wherein the circuitry portion of the image sensor includes the sensor array.

4. The multi-modality sensor according to any one of the previous claims, wherein a first sampling rate of the image sensor and a second sampling rate of the radar sensor have a controlled correspondence with each other.

5. The multi-modality sensor according to any one of the previous claims, wherein the multi-modality sensor is configured to combine first data generated by the image sensor and second data generated by the radar sensor into a combined time-synchronized data.

6. The multi-modality sensor of the previous claim, wherein the combined time-synchronized data represents image and radar data that are aligned according to a field of view FoV of an image frame captured by the image sensor; and/or
wherein the combined time-synchronized data comprises least one respective information of a direction vector, speed, or three-dimensional location including an angle and a distance from the multi-modality sensor to a target object.

7. The multi-modality sensor according to any one of the previous claims, further comprising:
an antenna array, including a plurality of antennas, configured to radiate a first electromagnetic wave signal through the antenna array, and to receive a second electromagnetic wave signal corresponding to a reflection of the radiated first electromagnetic wave signal off of an object,
wherein the antenna array is arranged, within a package of the multi-modality sensor, in a first lateral direction away from one or two first opposing sides of the sensor array, and/or in a second lateral direction, which is perpendicular to the first lateral direction, away from one or two second opposing sides of the sensor array, to radiate a signal of the radar sensor to a target object located in a corresponding direction;
wherein preferably the antenna array and the sensor array are configured in a same chip.

8. The multi-modality sensor according to any one of the claims 1-6, further comprising:
a plurality of antennas at least partially arranged around the sensor array,
wherein the sensor array is arranged between the plurality of antennas, and the sensor array and the plurality of antennas are configured in a form of a single chip.

9. The multi-modality sensor according to any one of the previous claims, further comprising:
an upper portion of the multi-modality sensor comprising a first extraction circuitry configured to extract image information by reading out a signal of the sensor array, based on a clock signal; and
a lower portion of the multi-modality sensor comprising one of:
a second extraction circuitry configured to extract radar information from a signal of the radar sensor, based on a source signal, or
the second extraction circuitry and a transmission module configured to transmit a combined time-synchronized data that has the image information combined with the radar information.

10. The multi-modality sensor according to claim 9, wherein the first extraction circuitry comprises at least one of:
a control logic circuit configured to generate and transmit a control signal for reading out a first signal of the sensor array;
a decoder configured to decode an analog signal of the sensor array;
a first analog-to-digital converter, ADC configured to convert the decoded analog signal into a digital signal; or
a clock generator configured to generate the clock signal.

11. The multi-modality sensor according to claim 9 or 10, wherein the second extraction circuitry comprises at least one of:
a ramp generator configured to generate the source signal for the radar sensor;
a synthesizer configured to change a frequency band of the source signal;
a phase controller configured to generate a radiation signal in a frequency band in which a signal with the changed frequency band is up-converted by a multiple of 4;
a filter low-noise amplifier, LNA configured to detect and amplify a reflection signal in which the radiation signal is reflected by hitting a target object;
an intermediate frequency, IF circuit configured to extract the source signal from the amplified reflection signal; or
a second ADC configured to convert the extracted source signal into a digital signal.

12. The multi-modality sensor according to any one of the previous claims 9-11, wherein the multi-modality sensor is configured to combine first data of the image sensor and second data of the radar sensor to generate the combined time-synchronized data by controlling a first sampling rate of the image sensor and a second sampling rate of the radar sensor, based on the source signal and the clock signal generated by the clock generator comprised in the multi-modality sensor.

13. The multi-modality sensor according to any one of the previous claims, wherein the multi-modality sensor is configured to provide a driving reference signal for time synchronization with at least one external sensor.

14. The multi-modality sensor according to any one of the previous claims, further comprising a common circuit including at least one of a down-sampling circuit configured to down-sample a signal generated by the radar sensor, a read-out circuit configured to read out data from the sensor array, or a clock generator,
wherein the radar sensor, the image sensor, and the common circuit are packaged as a single chip.

15. The multi-modality sensor according to claim 14, wherein the common circuit is arranged between the radar sensor and the image sensor; and/or
wherein the common circuit is arranged on a same substrate as the radar sensor; and/or
wherein the common circuit is arranged at least partially around the radar sensor and the image sensor without being in contact with the radar sensor and the image sensor.
